# FASCICULE DE BREVET EUROPEEN

(11) **EP 3 035 751 B1**
(45) Date de publication et mention de la délivrance du brevet: **10.06.2020**
(21) Numéro de dépôt: 15200277.0
(22) Date de dépôt: 15.12.2015
(51) Int. Cl.: H04W 60/04, H04W 12/08, H04W 12/12, H04L 29/06, H04W 8/04, H04W 4/029, H04W 12/00

(54) **TRAITEMENT DE DONNÉES RADIO-CELLULAIRES MIS EN OEUVRE PAR UNE CARTE SIM, NOTAMMENT À DES FINS DE SÉCURITÉ**
VERARBEITUNG VON DATEN EINES ZELLULAREN FUNKNETZES DURCH EINE SIM-KARTE, INSBESONDERE FÜR SICHERHEITSZWECKE
CELLULAR RADIO DATA PROCESSING IMPLEMENTED BY A SIM CARD, IN PARTICULAR FOR SECURITY PURPOSES

(30) Priorité: 19.12.2014 FR 1463025
(43) Date de publication de la demande: 22.06.2016
(73) Titulaire: Orange, 75015 Paris (FR)
(72) Inventeur: COLLET, Yann, 92794 ISSY LES MOULINEAUX CEDEX 9 (FR); LEMOINE, Pierre, 14970 BENOUVILLE (FR)
(74) Mandataire: Plasseraud IP

(56) Documents cités:
- EP-A1- 1 274 264
- EP-A1- 1 799 006
- EP-A1- 1 879 414
- US-A- 5 548 816
- US-A1- 2012 172 082
- US-A1- 2012 203 905

## Description

La présente invention concerne un traitement de données radio-cellulaires, mis en œuvre par des moyens informatiques d'une carte SIM, notamment pour suivre une localisation courante d'un terminal accueillant cette carte SIM, par exemple à des fins de sécurité.

Le terminal peut être par exemple un équipement communiquant avec un serveur via un réseau radio-cellulaire, tel qu'un terminal de paiement dans un magasin ou un restaurant. Pour des raisons de sécurité, il n'est pas souhaité qu'un utilisateur malveillant puisse subtiliser le terminal à des fins de piratage ou autre.

A cet effet, un serveur distant (par exemple un serveur de contrôle) suit la localisation du terminal en fonction d'identifiants de cellules radiofréquences dans lequel se situe le terminal. La carte SIM du terminal gère habituellement la transmission à ce serveur de notifications de changement de cellule.

Ainsi, la carte SIM d'un terminal en situation de mobilité reçoit habituellement du réseau un identifiant courant de cellule (par exemple à des instants réguliers, ou lors de l'établissement d'une communication), et transmet ces identifiants de cellule à un serveur qui vérifie, à l'aide de ces données, que le terminal ne s'éloigne pas au-delà d'une certaine distance d'une position prédéterminée.

Toutefois, la réception et le traitement de toutes les notifications par le serveur, à chaque réception d'identifiant de cellule, génère finalement une grande charge de travail auprès du serveur.

Pour limiter ce problème, on pourrait prévoir que la carte SIM :
- compare l'identifiant courant de cellule avec un identifiant précédemment stocké en mémoire (typiquement l'identifiant de cellule indiqué par le réseau à l'instant précédent, ou lors de la communication précédente),
- puis génère une notification destinée au serveur distant, seulement en cas de différence entre l'identifiant courant et l'identifiant de cellule précédemment stocké en mémoire.

Toutefois, là encore, dans certaines situations où par exemple le terminal de paiement est dans un grand restaurant ou un grand magasin, couvert par plusieurs cellules à la fois, le terminal de paiement, mobile, peut générer depuis la carte SIM une multiplicité de notifications au serveur à chaque changement de cellule.

De telles notifications limiteraient alors la rapidité de traitement de la carte SIM, et le terminal de paiement présenterait des lenteurs inutiles. Le serveur lui-même doit encore traiter toutes les notifications qu'il reçoit alors que ces localisations du terminal sont habituelles et très proches de sa localisation présumée d'origine.

Le document US 2012/172082 A1 divulgue la gestion d'une liste de cellule au sein d'un terminal ayant pour but de minimiser les notifications entre le terminal et le réseau en ne signalant que certain changement de cellules.

La présente invention vient améliorer la situation.

L'invention est définit dans les revendications.

Elle propose à cet effet un procédé de traitement de données radio-cellulaires, mis en œuvre par des moyens informatiques incluant une carte SIM, dans lequel la carte SIM d'un terminal en situation de mobilité :
- reçoit un identifiant courant de cellule,
- compare l'identifiant courant avec un identifiant précédemment stocké en mémoire,
la carte SIM étant susceptible de générer une notification destinée à un serveur distant, en cas de différence entre l'identifiant courant et un identifiant précédemment stocké en mémoire.

En particulier, la carte SIM stocke en mémoire une liste d'identifiants courants de cellules respectives dans lesquelles se situe successivement le terminal, et l'émission d'une notification au serveur est conditionnée par l'absence de l'identifiant courant dans cette liste.

Ainsi, la carte SIM de l'invention tient à jour une liste blanche des cellules dans lesquelles le terminal a pu se rendre (par exemple des cellules adjacentes à une localisation d'origine, prédéterminée). Tant que le terminal se rend, en situation de mobilité, dans l'une de ces cellules, connues, la carte SIM n'émet pas de notification au serveur et ne surcharge par ses ressources, celles du terminal et celles du serveur.

Ainsi, dans une forme de réalisation particulière, la carte SIM effectue les étapes suivantes, après réception d'un identifiant courant de cellule :
a) déterminer si l'identifiant courant de cellule est dans ladite liste, et si l'identifiant courant de cellule n'est pas dans la liste :
b) émettre une notification de changement de cellule au serveur, et
c) stocker l'identifiant courant de cellule dans la liste.

Bien entendu, à l'étape a), si l'identifiant courant de cellule est dans la liste précitée, la carte SIM n'effectue pas de notification de changement de cellule au serveur.

Il convient de préciser que les termes ci-avant « carte SIM » sont employés communément pour désigner une carte « UICC » (pour « Universal Integrated Circuit Card » tel que défini par l'organisme ETSI) comportant au moins l'une des applications SIM, USIM, ISIM et HPSIM (définies par la norme 3GPP). On comprendra ainsi que les termes « carte SIM » désignent ici une telle carte UICC.

Avantageusement, la mise en œuvre de la présente invention n'altère aucunement la sécurité de la vérification de la localisation du terminal.

Par exemple, dans une réalisation, une notification envoyée par la carte SIM au serveur comporte l'identifiant courant de cellule, permettant au serveur de comparer une localisation courante du terminal, correspondant à l'identifiant courant de cellule, à une localisation prédéterminée (typiquement une localisation d'origine, présumée), et d'exécuter une routine d'alerte si la localisation courante ne vérifie pas, relativement à la localisation prédéterminée, un critère choisi.

Par exemple, le serveur peut exécuter la routine d'alerte précitée si la localisation courante et la localisation prédéterminée sont écartées d'une distance supérieure à une distance seuil choisie.

Dans une forme de réalisation, sur réception d'un message d'alerte du serveur, la carte SIM inhibe toute émission de notification de changement de cellule au serveur. Ainsi, la carte SIM n'émet plus aucune notification au serveur de changement de cellule, ce qui permet encore de ne pas surcharger le serveur avec un traitement de notifications inutiles.

Dans une forme de réalisation, la carte SIM reçoit un ordre du serveur pour initier l'exécution des étapes du procédé, par exemple après une première mise en service de la carte SIM. Dans ce cas, le serveur peut récupérer le premier identifiant de cellule que lui notifie la carte SIM et prédéterminer ainsi qu'il s'agit de la localisation d'origine, précitée.

Comme indiqué précédemment, l'invention trouve une application avantageuse dans le cas d'un terminal correspondant à un équipement tel qu'un terminal de paiement, ou encore un équipement loué qui ne doit pas sortir d'une zone prédéfinie (par exemple un équipement de chantier), la carte SIM implémentant alors un procédé sécuritaire dans le cadre d'une application machine à machine (de l'anglais « machine to machine»). Ainsi, dans une forme de réalisation, le terminal est destiné à communiquer avec le serveur distant, en mode machine à machine.

La présente invention vise aussi une carte SIM comportant des moyens incluant une mémoire programmée pour exécuter les étapes du procédé ci-avant.

La présente invention vise aussi un programme informatique comportant des instructions pour la mise en œuvre du procédé ci-avant lorsque ce programme est exécuté par un processeur.

D'autres caractéristiques et avantages de l'invention apparaîtront à l'examen de la description détaillée ci-après, et des dessins annexés sur lesquels :
- la figure 1 illustre les éléments matériels intervenant dans la mise en œuvre du procédé, selon un exemple de réalisation,
- la figure 2a illustre une situation de mobilité d'un terminal comprenant une carte SIM selon l'invention,
- la figure 2b illustre les étapes d'un procédé au sens de l'invention selon un exemple de réalisation.

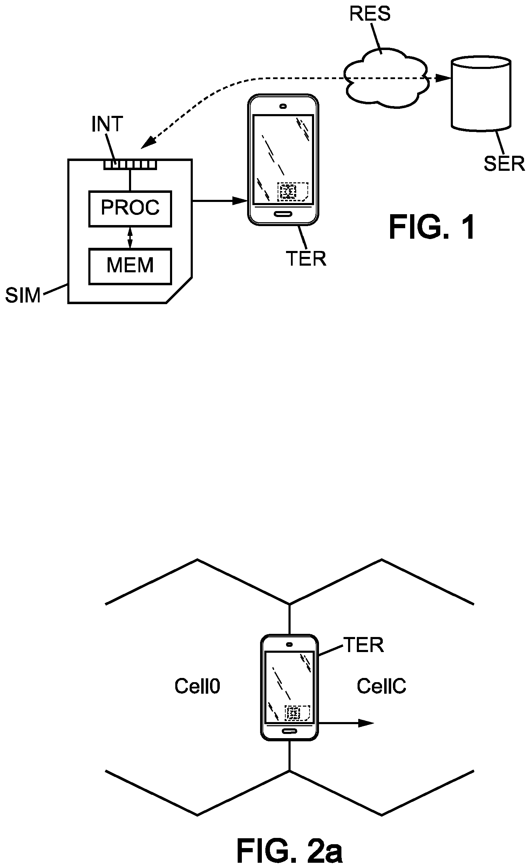

En référence à la figure 1, la carte SIM comporte typiquement un microcontrôleur (incluant par exemple un processeur PROC) et une unité mémoire MEM avec par exemple :
- une mémoire vive, de travail, pour stocker par exemple un identifiant courant de cellule Cell C,
- une mémoire non volatile pour stocker :
   * des instructions de programme informatique dont l'exécution permet de mettre en œuvre le procédé ci-avant, et
   * la liste précitée d'identifiants de cellule précédemment notifiés au serveur.

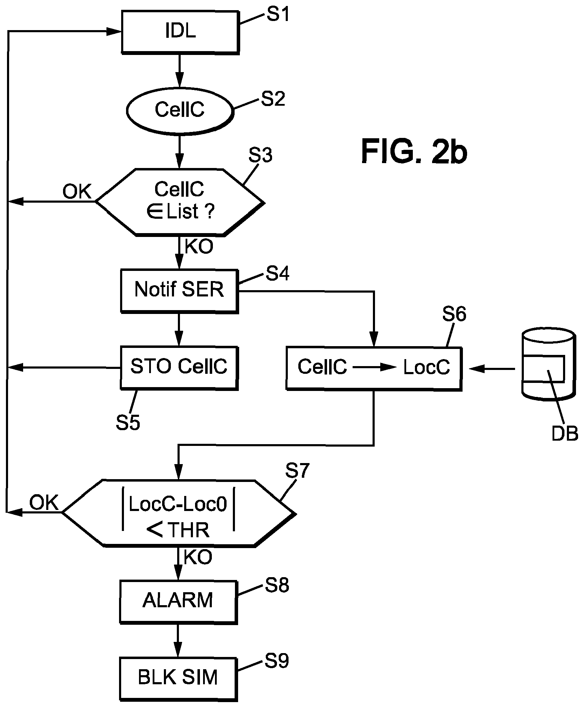

La carte SIM comporte en outre une interface de connexion INT avec le terminal TER qui l'accueille. En service, la carte SIM peut communiquer via le réseau RES avec un serveur de contrôle SER, auquel la carte SIM notifie les changements successifs de cellules dont les identifiants ne sont pas dans la liste. On comprendra que ce programme informatique peut avoir typiquement un algorithme dont l'ordinogramme peut être représenté par la figure 2b commentée ci-après.

En référence à la figure 2b, le procédé commence par une première étape S1, au cours de laquelle, par exemple, la carte SIM envoie un identifiant initial Cell 0 de la cellule dans laquelle la carte SIM est mise en service pour la première fois dans le terminal TER. Cet identifiant Cell 0 est stocké en mémoire de la carte SIM dans une liste blanche des identifiants de cellules dans lesquelles le terminal TER s'est situé successivement.

Ensuite, lorsque le terminal est en situation de mobilité vers une cellule courante, d'identifiant courant Cell C, comme illustré sur la figure 2a, à l'étape S2, la carte SIM récupère cet identifiant courant Cell C. La carte SIM vérifie à l'étape S3 si cet identifiant courant Cell C appartient déjà à une liste d'identifiants de cellules que stocke la carte SIM et qui correspondent à toutes les cellules successives avec lesquelles le terminal a été relié (depuis la mise en service de la carte SIM dans ce terminal).

Si l'identifiant courant de cellule Cell C appartient déjà à cette liste (flèche OK en sortie du test S3), la carte SIM n'envoie pas de notification au serveur SER et se remet dans un mode d'attente d'une éventuelle nouvelle situation de mobilité.

En revanche, si l'identifiant courant de cellule Cell C n'appartient pas à cette liste (flèche KO en sortie du test S3), la carte SIM envoie une notification au serveur SER qui inclut l'identifiant courant de cellule Cell C, à l'étape S4 et met à jour à l'étape S5 la liste qu'elle stocke en y ajoutant l'identifiant courant de cellule Cell C. Ensuite, la carte SIM se remet dans un mode d'attente d'une éventuelle nouvelle situation de mobilité.

Dans l'exemple décrit ici, le procédé peut se poursuivre auprès du serveur SER qui, sur réception de la notification comportant l'identifiant courant de cellule Cell C, détermine à l'étape S6 une localisation courante loc C, correspondant à cet identifiant courant de cellule Cell C. À cet effet, le serveur SER peut avoir recours à une base de données DB de localisations en fonction d'identifiants de cellule.

Ensuite, au test S7, le serveur SER détermine si la localisation courante loc C est éloignée de la localisation loc 0 de mise en service de la carte SIM (correspondant à l'identifiant initial Cell 0) de plus d'une distance seuil THR, choisie. Cette situation correspond au cas, par exemple, où le terminal TER s'éloigne en dehors des limites du magasin ou du restaurant (ou encore du chantier) dans lequel il est habituellement utilisé. Si tel est le cas (flèche KO en sortie du test S7), le serveur SER peut générer une alarme à l'étape S8 et éventuellement envoyer un ordre à la carte SIM à l'étape S9 pour qu'elle se mette dans un état bloqué (dans lequel typiquement elle n'envoie plus de notification au serveur, et éventuellement elle ne permet plus au terminal de se connecter au réseau).

En revanche, tant que la distance entre la localisation courante loc C et la localisation initiale loc 0 reste inférieure au seuil THR (flèche OK en sortie du test S7), le serveur SER ne génère pas d'alarme et se remet dans une situation d'attente d'une éventuelle notification en cas de mobilité dans une nouvelle cellule.

Ainsi, en résumé :
- au démarrage, la carte SIM envoie l'identifiant initial (Cell 0) de la cellule à laquelle elle est connectée (et ajoute bien entendu cet identifiant initial Cell 0 dans la liste blanche qu'elle stocke en mémoire),
- la carte SIM surveille ensuite les identifiants successifs de cellules à laquelle elle se connecte, comme suit :
   ∘ détection d'un changement de cellule, d'identifiant courant Cell C,
   ∘ vérification de l'appartenance de l'identifiant courant Cell C à la liste blanche stockée sur la carte SIM,
   ∘ si l'identifiant courant Cell C appartient à la liste blanche, la carte SIM met fin à ses opérations et retourne à un mode d'attente, afin d'éviter d'envoyer une multiplicité de notifications,
   ∘ si l'identifiant courant Cell C n'appartient pas à la liste blanche, alors :
      ▪ la liste est mise à jour dans la mémoire MEM de la carte SIM en y ajoutant l'identifiant courant Cell C, et
      ▪ la carte SIM envoie au serveur SER une notification comprenant l'identifiant courant Cell C,
- le serveur SER interroge une base de données DB (de type « location server ») pour traduire l'identifiant courant Cell C reçu en données géographiques (typiquement une localisation courante loc C à comparer avec une localisation d'origine loc 0 correspondant à l'identifiant de cellule initial Cell 0),
- suivant la distance entre la localisation courante loc C et la localisation d'origine loc 0, le serveur SER déclenche ou non une alerte.

Les notifications de la carte SIM au serveur SER sont par exemple sous la forme de message SMS adressés au serveur (ou encore de type « USSD » (pour « Unstructured Supplementary Service Data »), ou « BIP » (pour « Bearer Indépendant Protocole », ou https, ou autres).

L'avantage de procéder ainsi au sens de l'invention est alors de limiter le nombre de notifications envoyées (en évitant ainsi le coût d'une notification SMS, en offrant une économie de bande passante, mais aussi une économie d'énergie sur l'équipement embarquant la carte SIM).

L'invention permet alors d'offrir un service efficace dans le domaine de la géolocalisation, plus précisément celui de l'alerte en cas de déplacement (service de type dit « GPS anchor alarm »), tout en limitant les notifications qu'envoie la carte SIM au serveur SER.

Ce type de service est basé généralement sur des solutions de type GPS/Glonass, ce qui permet de se passer de dispositif de type GPS (et donc de déployer le service sur des équipements non dotés de puce GPS). En outre, la couverture d'un réseau cellulaire (de type GSM ou UMTS) est bien souvent de meilleure qualité que celle d'un satellite dans l'application GPS en environnement urbain (particulièrement en intérieur).

Bien entendu, la présente invention ne se limite pas aux formes de réalisation décrites ci-avant à titre d'exemple ; elle s'étend à d'autres variantes.

Par exemple, on a décrit ci-avant la possibilité de démarrer la surveillance d'un changement de cellule à partir de la mise en service de la carte SIM dans le terminal TER. Néanmoins, dans une variante, la surveillance peut commencer sur ordre du serveur SER ultérieurement à cette mise en service.

Par ailleurs, on a décrit ci-avant un mode de réalisation dans lequel la localisation courante est comparée à une localisation initiale (moyennant une distance autorisée entre les deux localisations). Néanmoins, dans d'autres réalisations possibles, il est possible de déclencher une alarme dans le cas où l'identifiant de cellule correspond simplement à une cellule non autorisée (par exemple prédéterminée et à la périphérie d'une zone particulière).

De plus, dans le mode de réalisation décrit plus haut, le procédé de traitement de données radio-cellulaires selon l'invention, est mis en œuvre par des moyens informatiques incluant une carte UICC (communément désignée par carte SIM). Cependant, selon d'autres modes de réalisation, l'invention peut être mise en œuvre par un module logiciel, distinct d'une carte UICC, et réalisant ou émulant tout ou partie des fonctionnalités d'une carte UICC.

Par conséquent, de manière générale, le procédé selon l'invention est mis en œuvre par un module de nature matérielle et/ou logicielle, désigné ici par « module de sécurité », et selon le mode de réalisation choisi, un tel module de sécurité peut comprendre une carte UICC, ou bien peut être distinct d'une carte UICC et, dans ce dernier cas, ce module peut être alors configuré pour mettre en œuvre tout ou partie des fonctionnalités assurées par une carte UICC.

## Revendications

1. Procédé de traitement de données radio-cellulaires, mis en œuvre par des moyens informatiques d'une carte SIM d'un terminal, **caractérisé en ce que** la carte SIM stocke en mémoire une liste d'identifiants courants de cellules respectives dans lesquelles se situe successivement le terminal, et, en situation de mobilité, effectue les étapes, après réception d'un identifiant courant de cellule :
a) déterminer si l'identifiant courant de cellule est dans ladite liste, et si l'identifiant courant de cellule n'est pas dans la liste :
b) émettre une notification de changement de cellule à un serveur distant de vérification de localisation courante du terminal, et
c) ajouter ledit identifiant courant de cellule à la liste,
l'émission d'une notification au serveur étant conditionnée par l'absence de l'identifiant courant dans ladite liste,
la notification envoyée au serveur comportant l'identifiant courant de cellule.

2. Procédé selon la revendication précédente, **caractérisé en ce que** le serveur pouvant communiquer avec la carte SIM du terminal :
- compare une localisation courante du terminal, correspondant à l'identifiant courant de cellule, à une localisation prédéterminée, et
- exécute une routine d'alerte si la localisation courante et la localisation prédéterminée sont écartées d'une distance supérieure à une distance seuil choisie.

3. Procédé selon l'une des revendications précédentes, **caractérisé en ce que**, sur réception d'un message d'alerte du serveur, la carte SIM inhibe toute émission de notification de changement de cellule au serveur.

4. Procédé selon l'une des revendications précédentes, **caractérisé en ce que** la carte SIM reçoit un ordre du serveur pour initier l'exécution des étapes du procédé.

5. Procédé selon la revendication 4, **caractérisé en ce que** la carte SIM reçoit ledit ordre du serveur après une première mise en service de la carte SIM.

6. Procédé selon l'une des revendications précédentes, **caractérisé en ce que** la carte SIM est destinée à communiquer avec le serveur distant, en mode machine à machine.

7. Carte SIM **caractérisée en ce qu'**elle comporte des moyens incluant une mémoire programmée pour exécuter les étapes a), b), c) du procédé selon l'une des revendications précédentes.

8. Programme informatique **caractérisé en ce qu'**il comporte des instructions pour la mise en œuvre du procédé selon l'une des revendications 1 et 3 à 6, lorsque ce programme est exécuté par un processeur d'une carte SIM.

## Patentansprüche

1. Verfahren zur Verarbeitung von Zellularfunkdaten, das durch Computermittel einer SIM-Karte eines Endgeräts umgesetzt wird, **dadurch gekennzeichnet, dass** die SIM-Karte eine Liste laufender Kennungen jeweiliger Zellen im Speicher speichert, in welchen sich das Endgerät nacheinander befindet, und nach Empfang einer laufenden Zellenkennung in einer Mobilitätssituation die folgenden Schritte durchführt:
a) Bestimmen, ob sich die laufende Zellenkennung in dieser Liste befindet, und wenn sich die laufende Zellenkennung nicht in der Liste befindet:
b) Senden einer Zellenwechselbenachrichtigung an einen entfernten Server zur Überprüfung der laufenden Lokalisierung des Endgeräts, und
c) Hinzufügen der laufenden Zellenkennung zu der Liste,
wobei das Senden einer Benachrichtigung an den Server durch das Nichtvorhandensein der laufenden Kennung in der Liste bedingt ist, wobei die Benachrichtigung, die an den Server gesendet wird, die laufende Zellenkennung aufweist.

2. Verfahren nach dem vorhergehenden Anspruch, **dadurch gekennzeichnet, dass** der Server, der mit der SIM-Karte des Endgeräts kommunizieren kann:
- eine laufende Lokalisierung des Endgeräts, die der laufenden Zellenkennung entspricht, mit einer vorbestimmten Lokalisierung vergleicht, und
- eine Warnroutine ausführt, wenn die laufende Lokalisierung und die vorbestimmte Lokalisierung um einen Abstand abweichen, der größer als ein gewählter Schwellenabstand ist.

3. Verfahren nach einem der vorhergehenden Ansprüche, **dadurch gekennzeichnet, dass** bei Empfang einer Warnmeldung vom Server die SIM-Karte jegliche Sendung von Zellenwechselbenachrichtigungen an den Server hemmt.

4. Verfahren nach einem der vorhergehenden Ansprüche, **dadurch gekennzeichnet, dass** die SIM-Karte einen Befehl vom Server empfängt, um die Ausführung der Schritte des Verfahrens einzuleiten.

5. Verfahren nach Anspruch 4, **dadurch gekennzeichnet, dass** die SIM-Karte den Befehl vom Server nach einer ersten Inbetriebnahme der SIM-Karte empfängt.

6. Verfahren nach einem der vorhergehenden Ansprüche, **dadurch gekennzeichnet, dass** die SIM-Karte dazu bestimmt ist, mit dem entfernten Server im Maschine-zu-Maschine-Modus zu kommunizieren.

7. SIM-Karte, **dadurch gekennzeichnet, dass** sie Mittel aufweist, die einen Speicher enthalten, der dafür programmiert ist, die Schritte a), b), c) des Verfahrens nach einem der vorhergehenden Ansprüche auszuführen.

8. Computerprogramm, **dadurch gekennzeichnet, dass** es Anweisungen für die Umsetzung des Verfahrens nach einem der Ansprüche 1 und 3 bis 6 umfasst, wenn dieses Programm von einem Prozessor einer SIM-Karte ausgeführt wird.

## Claims

1. Cellular radio data processing method, implemented by computing means of a SIM card of a terminal, **characterized in that** the SIM card stores in a memory a list of current identifiers of respective cells in which the terminal is successively located, and, in mobility situation, after reception of a current cell identifier, performs the steps of:
a) determining whether the current cell identifier is in said list and if the current cell identifier is not in the list:
b) sending a cell change notification to a remote server checking the current location of the terminal, and
c) adding said current cell identifier to the list,
the sending of a notification to the server being conditioned on the absence of the current identifier in said list,
the notification sent to the server including the current cell identifier.

2. Method according to the preceding claim, **characterized in that** the server capable of communicating with the SIM card of the terminal:
- compares a current location of the terminal, corresponding to the current cell identifier, to a predetermined location, and
- executes an alert routine if the current location and the predetermined location are separated by a distance greater than a chosen threshold distance.

3. Method according to one of the preceding claims, **characterized in that**, on reception of an alert message from the server, the SIM card inhibit any sending of a cell change notification to the server.

4. Method according to one of the preceding claims, **characterized in that** the SIM card receives a command from the server to initiate the execution of the steps of the method.

5. Method according to Claim 4, **characterized in that** the SIM card receives said command from the server after the SIM card is first activated.

6. Method according to one of the preceding claims, **characterized in that** the SIM card is intended to communicate with the remote server, in machine-to-machine mode.

7. SIM card, **characterized in that** it comprises means including a memory programmed to execute the steps a), b), c) of the method according to one of the preceding claims.

8. Computer program, **characterized in that** it comprises instructions for implementing the method according to one of Claims 1 and 3 to 6, when this program is executed by a processor of a SIM card.
